# EUROPÄISCHE PATENTANMELDUNG

(11) **EP 1 323 936 A2**
(43) Veröffentlichungstag der Anmeldung: **02.07.2003**
(21) Anmeldenummer: 02406016.2
(22) Anmeldetag: 25.11.2002
(51) Int. Cl.: F16B 37/04

(54) **Längliche Profilschiene**

(30) Priorität: 05.12.2001 DE 10159600
(71) Anmelder: HILTI Aktiengesellschaft, 9494 Schaan (LI)
(72) Erfinder: Herb, Armin, 86974 Apfeldorf (DE); Hoffmann, Armin, 86899 Landsberg (DE); Unverzagt, Stefan, 86929 Penzing (DE)
(74) Vertreter: Wildi, Roland

(57) **Zusammenfassung**

Eine Verankerungsvorrichtung mit einem Halteteil (1) und einer, einen C-förmigen Querschnitt aufweisenden, Profilschiene (2) weist am Halteteil (1) eine Verzahnung (12) auf, die mit einer Zahnprofilierung (13) der Profilschiene (2) zusammenwirkt. Die Anzahl Zähne pro Längeneinheit in Längsrichtung (L) der Profilschiene (2) der Verzahnung entspricht einem mehrfachen, insbesondere dem zweifachen, der Anzahl Zähne pro Längeneinheit in Längsrichtung (L) der Zahnprofilierung (13), um eine Fein-Justierung des Halteteils (1) gegenüber der Profilschiene (2) zu ermöglichen.

## Beschreibung

Die Erfindung betrifft eine Verankerungsvorrichtung zur Befestigung von Gegenständen, mit einem Halteteil und einer Profilschiene, die einen C-förmigen Querschnitt aufweist, die an ihren nach innen gerichteten Längskanten mit einer Zahnprofilierung versehen ist, wobei das Halteteil, eine mit der Zahnprofilierung zusammenwirkende Verzahnung aufweist.

Verankerungsvorrichtungen der oben genannten Art dienen zum Festlegen von Gegenständen, beispielsweise Rohren, an Profilschienen deren Querschnitt im wesentlichen C-förmig ausgebildet ist. Wobei die Profilschiene zwei zueinander parallel verlaufende Längskanten aufweist, die in das Innere der Profilschiene ragen. Das Halteteil befindet sich im Innern der Profilschiene und ist im vormontierten Zustand innerhalb der Profilschiene in Längsrichtung versetzbar. Um in einem festgelegten Zustand des Halteteils ein axiales Verschieben gegenüber der Profilschiene zu verhindern, weisen sowohl die Längskanten eine Zahnprofilierung und das Halteteil eine Verzahnung auf, die miteinander zusammenwirken.

Aus der DE 4 432 996 A1 ist eine Verankerungsvorrichtung mit einer, einen C-förmigen Querschnitt aufweisenden Profilschiene und einem, eine Verzahnung aufweisenden, Halteteil bekannt. Ferner weist die Profilschiene nach innen gerichtete, mit einer Zahnprofilierung versehene Längskanten auf. Durch die komplementäre Ausbildung der Verzahnung des Halteteils und der Zahnprofilierungen der Profilschiene, greifen diese in einer festgelegten Zustand des Halteteils zur Profilschiene formschlüssig ineinander und verhindern dadurch eine axiale Versetzung des Haltteils gegenüber der Profilschiene. In einer temporären Fixierung greift die Verzahnung derart in die Zahnprofilierung, dass ein Rasteffekt entsteht und das Halteteil in Längsrichtung verschiebbar in der Profilschiene geführt ist.

Ferner ist aus der EP 0 278 252 A2 eine Verankerungsvorrichtung mit einer einen C-förmigen Querschnitt aufweisenden Profilschiene und einem, eine Verzahnung aufweisenden, Halteteil bekannt. Ferner weist die Profilschiene mit einer Zahnprofilierung versehene Längskanten auf. Die Zahnprofilierung ist beispielsweise aus im Querschnitt rechteckförmigen, sägezahnartigen oder kreisförmigen Ausnehmungen gebildet. Die Verzahnung des Halteteils ist, um einen formschlüssigen Eingriff der beiden Teile in einem festgelegten Zustand sicherzustellen komplementär dazu ausgebildet. Diese bekannte Ausführungsform hat insbesondere den Nachteil, dass keine temporäre Fixierung mit einem Rasteffekt möglich ist, da weder die Verzahnung noch die Zahnprofilierung eine Rampe aufweisen.

Nachteilig an den bekannten Lösungen ist, dass bei einer grob ausgebildeten Verzahnung und Zahnprofilierung ein Anwender keine Fein-Justierung des Halteteils relativ zur Profilschiene vornehmen kann, da im festgelegten Zustand ein formschlüssiger Eingriff der beiden Teile gegeben sein muss, um die vorgegebenen Lastwerte zu gewährleisten. Eine feinere Ausbildung der ausgebildeten Verzahnung und Zahnprofilierung erhöht insbesondere die Herstellungskosten der Profilschiene.

Der vorliegenden Erfindung liegt die Aufgabe zugrunde, eine wirtschaftlich herstellbare Verankerungsvorrichtung mit einer, einen C-förmigen Querschnitt aufweisenden, Profilschiene und einem, eine Verzahnung aufweisenden, Halteteil zu schaffen, die einerseits eine Fein-Justierung des Halteteils gegenüber der Profilschiene zulässt und andererseits hohe Lastwerte sicherstellt.

Erfindungsgemäss wird die Aufgabe dadurch gelöst, dass die Verzahnung eine zur Zahnprofilierung unterschiedliche Aufteilung der Zähne in Längsrichtung aufweist.

Dadurch, dass die Verzahnung eine zur Zahnprofilierung unterschiedliche Aufteilung der Zähne aufweist, um eine feinere Abstufung beim Einrasten des Halteteils und der Profilschiene zu gewährleisten. Vorzugsweise weist die Verzahnung eine feinere Aufteilung als die Zahnprofilierung auf, um eine wirtschaftliche Herstellung der Profilschiene und eine robuste Zahnprofilierung sicherzustellen.

Die Aufteilung Zähne der Zahnprofilierung entspricht vorteilhafterweise einem mehrfachen, insbesondere dem zweifachen, der Aufteilung der Zähne der Verzahnung, um eine optimale, formschlüssige Verbindung der Profilschiene und des Halteteils in einem festgelegten Zustand zu gewährleisten. Vorteilhafterweise sind die Zahnprofilierung und/oder die Verzahnung sägezahnförmig ausgebildet, um einen optimalen Rasteffekt beim axialen Verschieben des Halteteils gegenüber der Profilschiene sicherzustellen. Selbstverständlich sind je nach Rahmenbedingungen auch andere geometrische Ausbildungen der Verzahnung und der Zahnprofilierung einsetzbar, beispielsweise Löcher und Bolzen oder im Querschnitt rechtekkige Ausnehmungen.

Die Verzahnung weist vorteilhafterweise erste Führungsflächen auf, die zumindest teilweise in Kontakt mit zweiten Führungsflächen der Zahnprofilierung bringbar sind, wobei der Neigungswinkel zur Längsrichtung der ersten Führungsflächen höchstens dem Neigungswinkel der zweiten Führungsflächen entsprechen, um ein Verkeilen der Verzahnung mit der Zahnprofilierung zu vermeiden.

Die Erfindung wird nachstehend anhand eines Ausführungsbeispieles näher erläutert. Es zeigen
- Fig. 1: eine erfindungsgemässe Verankerungsvorrichtung im Längsschnitt;
- Fig. 2: einen Querschnitt der in Fig. 1 dargestellten Verankerungsvorrichtung;

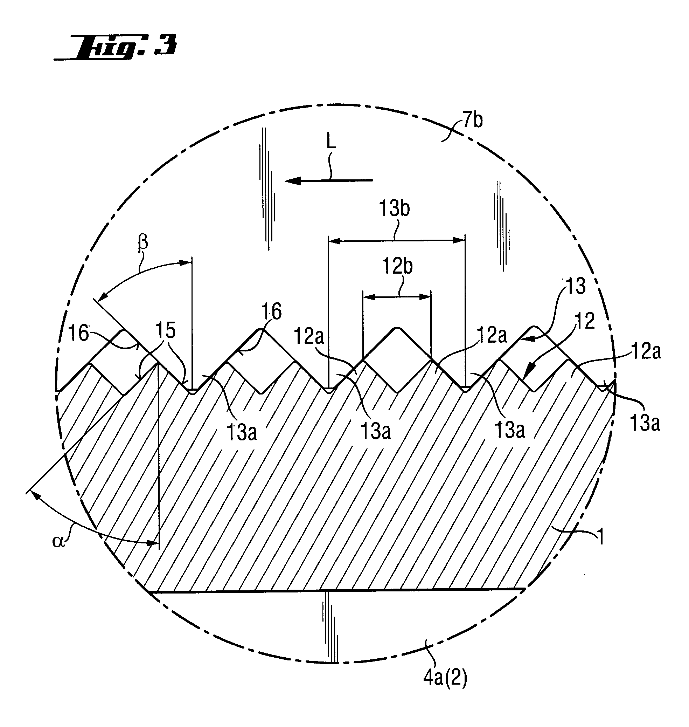

- Fig. 3: eine vergrösserte Ansicht des in Fig. 1 dargestellten Details III.

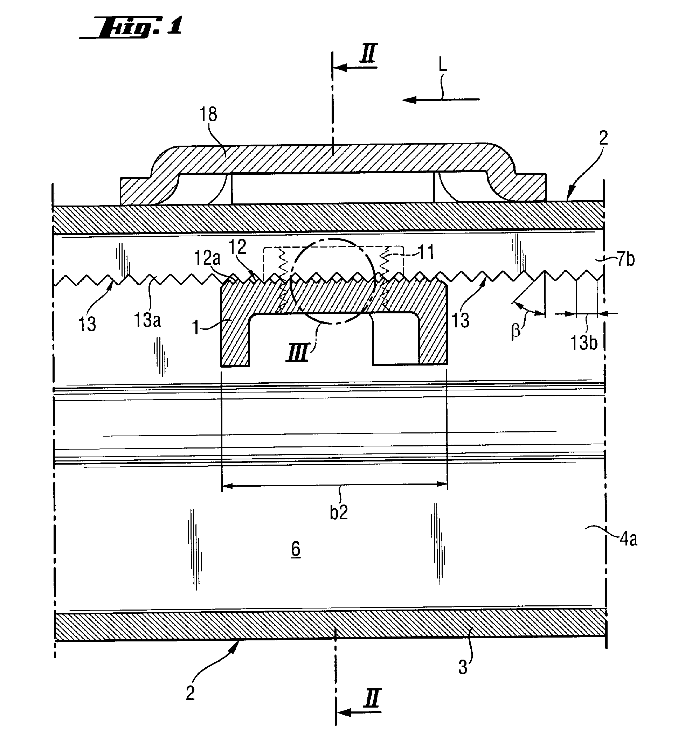

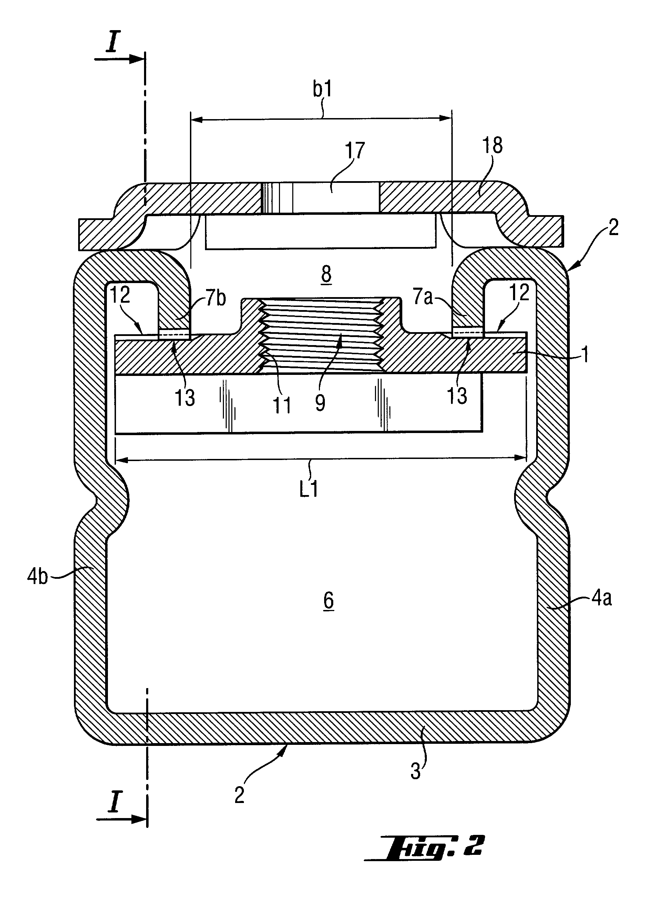

In den Fig. 1 und 2 ist eine erfindungsgemässe Verankerungsvorrichtung mit einem Halteteil 1 und einer, einen C-förmigen Querschnitt aufweisenden, Profilschiene 2 dargestellt.

Die Profilschiene 2 weist ein Bodenteil 3 von dem zwei parallel verlaufende Seitenwände 4a, 4b rechtwinklig abstehen. Die freien Enden der Seitenwände 4a, 4b sind in den Innenraum 6 der Profilschiene 2 abgebordelt und bilden Längskanten 7a, 7b. Die Längskanten 7a, 7b begrenzen eine, eine Breite b1 aufweisende, Längsöffnung 8 der Profilschiene 2.

Das im Innenraum 6 der Profilschiene 2 angeordnete, unrund ausgebildete Halteteil 1 weist eine Breite b2 auf die kleiner als die Breite b1 der Längsöffnung 8 der Profilschiene 2 ist. Ausserdem ist die Länge L1 des Halteteils 1 grösser als die Breite b1 der Längsöffnung 8 der Profilschiene 2 ausgebildet. Das Halteteil 1 weist ferner zum Festlegen beispielsweise einer nicht dargestellten Gewindestange eine etwa quer zur Längsrichtung L und etwa mittig verlaufende Durchgangsbohrung 9 mit einem Innengewinde 11 auf.

Das Halteteil 1 weist eine Verzahnung 12 auf, die jeweils mit an den Stirnseiten-Längskanten 7a, 7b der Profilschiene 2 angeordneten Zahnprofilierung 13 zusammenwirkt, wobei die Verzahnung 12 eine zur Zahnprofilierung 13 unterschiedliche Aufteilung 12b der Zähne 12a gegenüber der Aufteilung 13b der Zähne 13a in Längsrichtung L der Profilschiene 2 aufweist. Die Aufteilung 13b der Zähne 13a der Zahnprofilierung 13 entspricht einem mehrfachen, insbesondere dem zweifachen der Aufteilung 12b der Zähne 12a der Verzahnung 12.

Die Verzahnung 12 weist erste Führungsflächen 15 auf, die zumindest teilweise in Kontakt mit zweiten Führungsflächen 16 der Zahnprofilierung 13 bringbar sind, wobei der Neigungswinkel a zur Längsrichtung L der ersten Führungsflächen 15 höchstens dem Neigungswinkel β der zweiten Führungsflächen 16 entsprechen.

Bei der Verwendung der erfindungsgemässen Verankerungsvorrichtung wird das Halteteil 1 in den Innenraum 6 der Profilschiene 2 durch die Längsöffnung 8 eingeführt. Da die Breite b1 der Längsöffnung 8 der Profilschiene 2 grösser als die Breite b2 des Halteteils 1 ist, ist es möglich das parallel zur Längsrichtung L der Profilschiene 2 ausgerichtete Halteteil 1 in die Längsöffnung 8 einzuführen. Liegt eine durch die Gewindestange mit dem Halteteil 1 verbunden, plattenförmige Halteplatte 18 auf den Längskanten 7a, 7b auf, so wird das Halteteil 1 derart gegenüber der Profilschiene 2 verdreht, dass das Halteteil 1 die Längskanten 7a, 7b zumindest teilweise hintergreift. Um eine temporäre Fixierung des Halteteils 1 gegenüber der Profilschiene 2 sicherzustellen, werden die Längskanten 7a, 7b zwischen der, eine Durchgangsbohrung 17 aufweisenden, Halteplatte 18 und dem Halteteil 1 leicht verspannt. In der temporären Fixierung ist das Halteteil 1 gegenüber der Profilschiene 2 in Längsrichtung L versetzbar. Die Verzahnung 12 des Halteteils 1 und die Zahnprofilierung 13 greifen leicht ineinander und bewirken dadurch einen Rasteffekt zwischen den beiden Teilen. Befindet sich das Halteteil 1 an der gewünschten Position werden die Längskanten 7a, 7b zwischen dem Halteteil 1 und der Halteplatte 18 verspannt und dadurch festgelegt, wie dies in den Fig. 1 und 2 dargestellt ist. Die Verzahnung 12 greift nun formschlüssig in die Zahnprofilierung 13 und ein Verschieben des Halteteils 1 in Längsrichtung L ist dadurch verunmöglicht.

## Patentansprüche

1. Verankerungsvorrichtung zur Befestigung von Gegenständen, mit einem Halteteil (1) und einer Profilschiene (2), die einen C-förmigen Querschnitt aufweist, die an ihren nach innen gerichteten Längskanten (7a, 7b) mit einer Zahnprofilierung (13) versehen sind, wobei das Halteteil (1), eine mit der Zahnprofilierung (13) zusammenwirkende Verzahnung (12) aufweist, **dadurch gekennzeichnet, dass** die Verzahnung (12) eine zur Zahnprofilierung (13) unterschiedliche Aufteilung (12b) der Zähne (12a, 13a) aufweist.

2. Verankerungseinrichtung nach Anspruch 1, **dadurch gekennzeichnet, dass** die Aufteilung (13b) Zähne (13a) der Zahnprofilierung (13) einem mehrfachen der Aufteilung (12b) der Zähne (12a) der Verzahnung (12) entspricht.

3. Verankerungseinrichtung nach Anspruch 1 oder 2, **dadurch gekennzeichnet, dass** die Verzahnung (12) erste Führungsflächen (15) aufweist, die zumindest teilweise in Kontakt mit zweiten Führungsflächen (16) der Zahnprofilierung (13) bringbar sind, wobei der Neigungswinkel (α) zur Längsrichtung (L) der ersten Führungsflächen (15) höchstens dem Neigungswinkel (β) der zweiten Führungsflächen (16) entsprechen.
